# FASCICULE DE BREVET EUROPEEN

(11) **EP 1 195 120 B1**
(45) Date de publication et mention de la délivrance du brevet: **29.09.2004**
(21) Numéro de dépôt: 01420192.5
(22) Date de dépôt: 11.09.2001
(51) Int. Cl.: A47J 27/21, A47J 37/12

(54) **Appareil électroménager comprenant un élément mobile apte à être mis en place de façon amovible sur un socle**
Elektrisches Haushaltsgerät mit einem bewegbaren Element, das auf einem Sockel aufgesetzt werden kann
Electric household appliance with a movable element which can be positioned on a socket

(30) Priorité: 04.10.2000 FR 0012691
(43) Date de publication de la demande: 10.04.2002
(73) Titulaire: SEB S.A., 69130 Ecully (FR)
(72) Inventeur: Gailhard, Thierry, 69970 Chaponnay (FR); Lavillat, Olivier, 74600 Chaux (Balmont) (FR)

(56) Documents cités:
- EP-A- 0 380 369
- DE-A- 3 836 099
- DE-U- 29 809 392
- GB-A- 2 145 245
- US-A- 3 742 174
- US-A- 3 742 178

## Description

### Domaine technique

L'invention se rattache au domaine de l'électroménager. Elle vise plus précisément des appareils électroménagers comportant un élément mobile amovible dans un socle, dans lesquels des informations doivent être transmises depuis la partie mobile à destination du socle. Elle concerne plus spécifiquement la conception des moyens électroniques qui assurent la transmission de cette information de l'élément mobile vers le socle avec un haut niveau de fiabilité et un faible prix de revient.

Bien que l'invention soit décrite pour la suite dans son application particulière aux bouilloires sans fil, elle n'est en aucun cas limitée à cette simple application, et peut au contraire être utilisée dans de nombreux types d'appareils différents.

### Techniques antérieures

On connaît déjà les bouilloires dites "sans fil", qui sont constituées d'un socle relié au secteur par un cordon d'alimentation, et d'un pot amovible par rapport au socle. Le pot contient un élément chauffant, typiquement une résistance électrique, qui lorsqu'elle est alimentée, permet de chauffer l'eau contenue dans le pot.

L'alimentation de la résistance chauffante s'effectue grâce à un connecteur situé au niveau de la zone de contact entre le pot et le socle. Ce connecteur comporte typiquement trois pôles, à savoir une phase, un neutre et une terre.

Des solutions ont déjà été proposées pour assurer un certain nombre de fonctions supplémentaires dans la gestion de l'alimentation de la bouilloire. Des fonctions de régulation et/ou de protection peuvent ainsi être assurées.

De façon générale, ces fonctions sont obtenues par l'emploi de composants électromécaniques, ce qui limite l'étendue des fonctionnalités accessibles.

En outre, on a déjà proposé d'installer à l'intérieur un boîtier de commande électronique du pot amovible, ce qui permet d'élargir le champ des fonctions réalisables. Néanmoins, de telles solutions présentent de multiples inconvénients.

Ainsi, le fait que le boîtier électronique soit situé à l'intérieur du pot amovible exige une étanchéité parfaite pour éviter que l'électronique ne soit endommagée par des infiltrations d'eau notamment lors des opérations de nettoyage. En outre, la présence d'un élément chauffant à proximité du module électronique induit les contraintes thermiques sur ce dernier. En conséquence, le prix de revient d'une telle solution est relativement élevé.

Dans une solution particulière, le module électronique peut être associée à une thermistance qui assure une double fonction. Cette thermistance peut mesurer à la fois la température de l'eau et détecter rapidement la surchauffe de l'élément chauffant quand il n'y pas d'eau dans le pot. Cette thermistance est logée de manière à être influencée par la température de l'eau lorsque cette dernière est présente, et par la température de l'élément chauffant en absence d'eau.

Par ailleurs, on connaît une autre solution dans laquelle l'électronique de régulation est située dans le socle, et fonctionne en tenant compte d'une information élaborée dans le pot amovible, et transmise par un connecteur particulier. Plus précisément, l'information de l'ébullition de l'eau est prise dans le pot par un limiteur thermique situé dans le passage de la vapeur. Ce limiteur s'ouvre en présence de vapeur. Cette information est transmise au socle par deux fils via un connecteur supplémentaire.

Cette information est spécifique au phénomène d'ébullition et ne peut pas être utilisé pour d'autres fonctions, telles que notamment une protection de surchauffe. En outre, une information de type "contact ouvert ou fermé" ne permet pas des opérations de régulation en température par exemple.

Il est difficilement envisageable de remplacer un composant électromécanique, tel que le limitateur thermique précité, par une thermistance, compte tenu des contraintes existant sur les contacts entre le socle et le pot.

En effet, les contacts électriques par lesquels se transmet une information entre le pot et le socle, sont soumis à d'éventuels phénomènes d'oxydation qui en modifient l'impédance. Ainsi, une thermistance localisée dans le pot, qui serait liée au socle par l'intermédiaire d'un connecteur, délivrerait une information aléatoire, en fonction de l'état d'oxydation du connecteur. Un tel montage sera bien entendu inutilisable pour une régulation optimisée.

Un objectif de l'invention est de permettre l'équipement d'une bouilloire sans fil, ou plus généralement d'un appareil comportant un élément mobile et amovible d'un socle, avec un dispositif permettant un échange d'informations de l'élément mobile vers le socle, qui soit de coût particulièrement réduit, fiable et robuste.

### Exposé de l'invention

L'invention concerne donc un appareil électroménager, qui comprend un élément mobile apte à être mis en place de façon amovible sur un socle, dans lequel l'élément mobile comporte une résistance électrique chauffante alimentée par une source d'énergie électrique associée au socle via un connecteur situé dans la zone de contact entre l'élément mobile et le socle, et dans lequel un signal représentatif d'une grandeur physique de l'élément mobile est transmis de l'élément mobile vers le socle.

Cet appareil se caractérise en ce que l'élément mobile comprend des moyens électroniques analogiques incluant un générateur de rapport cyclique variable en fonction d'une information représentative d'une grandeur physique de l'élément mobile.

Autrement dit, l'élément mobile est équipé d'une résistance chauffante alimentée par un circuit de puissance, et comporte un module électronique qui émet, à destination du socle, une information de type rapport cyclique variable, élaborée à partir de composants particulièrement simples du type amplificateur opérationnel, à l'exclusion de tout composant digital.

Le signal peut être envoyé depuis l'élément mobile vers le socle sous diverses formes. Il peut s'agir d'une transmission optique par infrarouge par exemple, ou d'une liaison par ondes radio, ou bien encore d'une transmission électrique, par une connexion du type contact conducteur.

La transmission d'une information du type par rapport cyclique variable est particulièrement avantageuse puisqu'elle est insensible aux phénomènes d'atténuation qui peuvent apparaître du fait d'une transmission affaiblie, ou d'un mauvais contact conducteur.

En outre, les dérives en température que subissent les composants intervenants dans le générateur de rapport cyclique variable ne sont pas préjudiciables à la qualité d'informations transmises, puisque l'information n'est pas mesurée par rapport à des temps absolus, mais par rapport à des temps qui dérivent de la même façon.

Avantageusement en pratique, le pot comporte en outre un module électronique de conditionnement délivrant au générateur de rapport cyclique variable, une tension fonction de la grandeur physique de l'élément mobile mesurée.

Autrement dit, les moyens électroniques comprennent un étage amplificateur qui conditionne le signal en provenance de l'organe sensible à la variation de la température, de sorte que le générateur de rapport cyclique est commandé en tension.

Avantageusement en pratique, le générateur de rapport cyclique attaque un module de transmission qui élabore le signal qui sera transmis à destination du socle.

Dans une première variante de réalisation, le module de transmission peut comporter un composant optoélectronique, commandé par le signal issu du générateur de rapport cyclique variable, en vue de la transmission d'un signal optique depuis l'élément mobile vers le socle.

Il peut s'agir par exemple d'une diode électroluminescente ou infrarouge associée à un transistor commandé par le signal issu du générateur de rapport cyclique variable, adapté en impédance.

Dans une seconde variante de réalisation, le module de transmission peut comporter une broche de connexion commandée par le signal issu du générateur de rapport cyclique variable, en vue de la transmission d'un courant électrique depuis l'élément mobile vers le socle.

Autrement dit, le signal de rapport cyclique variable est transmis par un courant électrique entre l'élément mobile et le socle, en utilisant une broche supplémentaire au connecteur de puissance, en association avec la borne de masse de ce même connecteur de puissance.

Dans une autre variante, le module de transmission peut comporter un émetteur radio commandé par le signal issu du générateur de rapport cyclique, en vue de l'émission vers le socle d'ondes radio de fréquence comprise entre quelques dizaines de kiloHertz et le gigaHertz.

Avantageusement en pratique, le module de conditionnement est relié à une thermistance sensible à la température d'un ou plusieurs organes de l'élément mobile. La variation de résistance de la thermistance en fonction de la température permet de générer une tension variable en fonction de la température, cette tension commandant ensuite le générateur de rapport cyclique variable.

Avantageusement en pratique, les différents étages constitués par le générateur de rapport cyclique variable, les modules de conditionnement et de transmission comportent chacun un amplificateur opérationnel, ces amplificateurs opérationnels appartenant tous à un boîtier unique.

De la sorte, les moyens électroniques embarqués sur l'élément mobile comportent un seul composant actif et un grand nombre de composants passifs.

### Description sommaire des figures

La manière de réaliser l'invention, ainsi que les avantages qui en découlent ressortiront bien de la manière de réaliser décrite dans les figures annexées, dans lesquelles :
La figure 1 est une vue schématique d'une bouilloire équipée conformément à l'invention.
La figure 2 est un schéma électronique des moyens électroniques embarqués sur le pot mobile de la bouilloire de la figure 1.
La figure 3 est un schéma électronique simplifié des moyens électroniques présents sur le socle.
La figure 4 est un chronogramme illustrant la variation du rapport cyclique du signal émis en direction du socle, pour différentes températures d'eau.

### Manière de réaliser l'invention

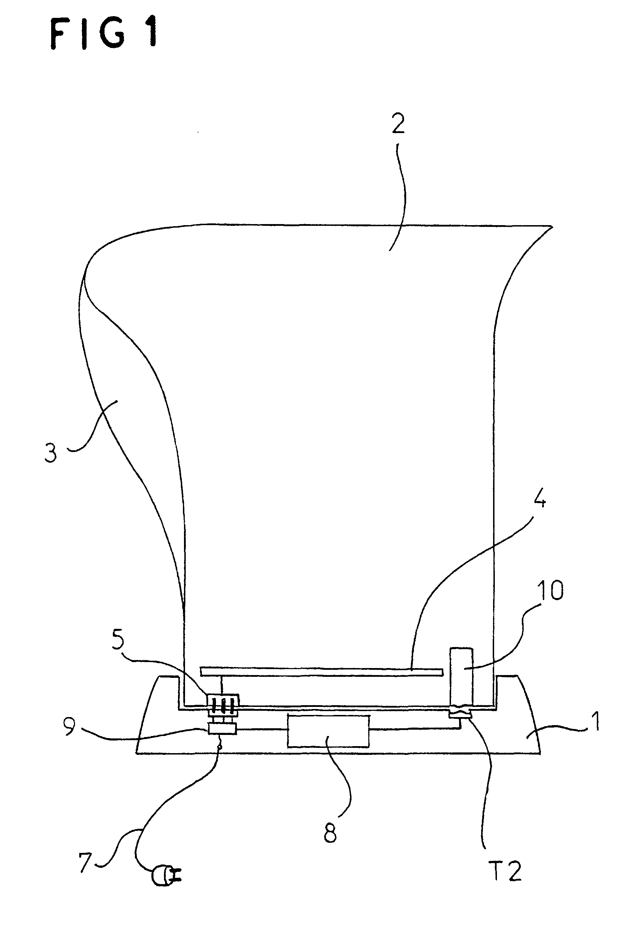

Comme déjà évoqué, l'invention est décrite en détail dans son application à des bouilloires sans fil telles qu'illustrées à la figure 1.

Une telle bouilloire comporte un socle (1) sur lequel peut être mis en place un pot (2) amovible. Ce pot comporte une zone de préhension (3).

Le pot (2) comporte également une résistance chauffante (4) située à proximité du fond du pot. Cette résistance chauffante (4) est reliée à un connecteur (5) situé sur la zone du pot en regard du socle (1). Ce connecteur (5) comporte trois pôles, à savoir une masse, une phase, et une terre. Ce connecteur (5) permet l'alimentation de la résistance chauffante (4) à partir de la tension secteur. A cet effet, le socle (1) comporte un cordon d'alimentation (7).

Conformément à l'invention, le socle (1) comporte un module électronique (8) apte à assurer la régulation de l'alimentation de la résistance électrique (4), ainsi qu'une fonction de protection. Le module électronique (8) peut ainsi assurer l'alimentation de résistance chauffante (4) par l'intermédiaire de contacteurs (9) commandés de façon appropriée.

Conformément à l'invention, le pot (2) est équipé de moyens électroniques spécifiques (10) destinés à assurer la transmission d'une information relative à la température de l'eau (ou de l'élément chauffant du pot), en direction du socle et à destination des moyens de régulation (8). Plus précisément, les moyens électroniques (10) comportent dans la forme illustrée des composants optoélectroniques assurant la transmission d'un signal infrarouge depuis la face inférieure du pot vers la zone en regard du socle.

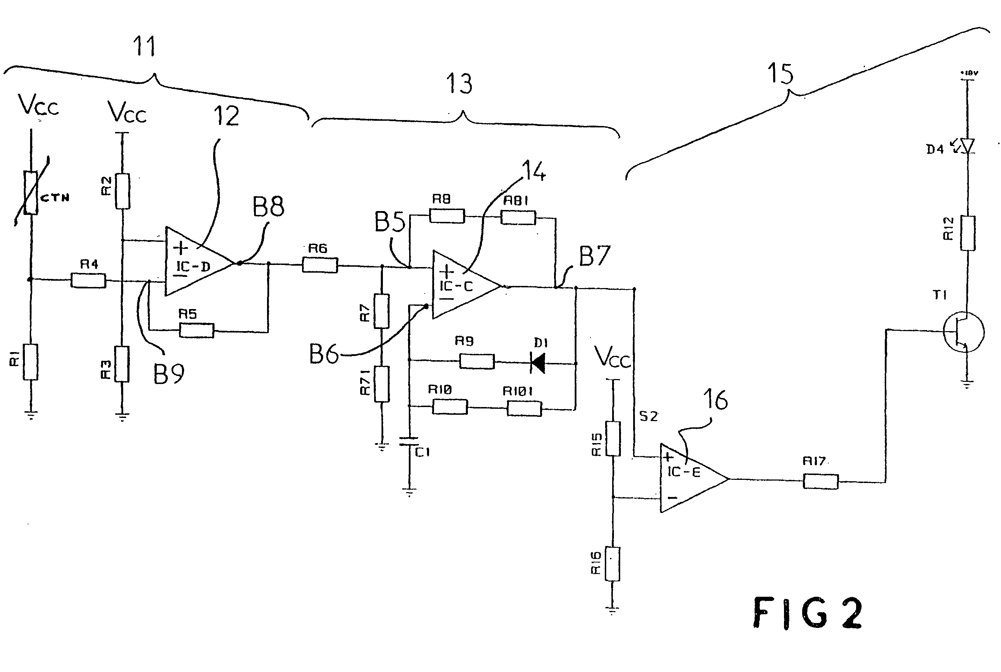

Plus précisément, les moyens électroniques (10) embarqués sur le pot mobile sont illustrés à la figure 2. Ces moyens comprennent un étage de conditionnement (11) comportant un amplificateur opérationnel (12) bouclé sur son entrée inverseuse B9, et qui délivre une tension fonction de la valeur de la résistance CTN, elle-même sensible à la température de son voisinage.

Conformément à l'invention, les moyens électroniques (10) embarqués sur le pot comportent un générateur de rapport cyclique (13). Ce générateur de rapport cyclique (13) comporte un amplificateur opérationnel (14) bouclé sur son entrée non inverseuse B5, ainsi qu'une capacité C1 dont une borne est reliée à la masse, l'autre borne étant connectée à l'entrée inverseuse B6 de l'amplificateur opérationnel (14).

Le fonctionnement du générateur de rapport cyclique variable est le suivant. Lorsque la capacité C1 est déchargée, et que la tension sur la borne inverseuse B6 de l'amplificateur opérationnel (14) est inférieure à la tension présente sur la borne inverseuse B5, la borne de sortie B7 de l'amplificateur opérationnel (14) est à un potentiel voisin de la tension d'alimentation V_{cc} (par exemple + 12V). La tension sur la borne non inverseuse B5 est déterminée en fonction de la tension de sortie B8 de l'étage de conditionnement, de la tension d'alimentation V_{cc} et des différentes résistances (R6, R7, R71, R8 et R81).

Ainsi, lorsque la tension en sortie B7 de l'amplificateur opérationnel (14) est à un niveau haut, la capacité C1 se charge à travers les résistances R9 et R10, R10 en parallèle, la diode D1 étant conductrice. La capacité C1 se charge jusqu'à ce que la tension à ses bornes atteigne le potentiel présent sur la borne non inverseuse B5. A ce moment, la sortie B7 de l'amplificateur opérationnel (14) passe à un potentiel voisin de 0, ce qui d'une part, modifie la tension au niveau de la borne non inverseuse B5, et bloque la conduction de la diode D1. La capacité C1 se décharge alors à travers les résistances R10 et R101, et la valeur de la tension sur la borne non inverseuse B5 de l'amplificateur opérationnel (14) passe à une valeur inférieure, fonction de la tension en sortie B8 de l'étage de conditionnement (11), et des différentes résistances R6, R7, R8 qui lui sont reliées.

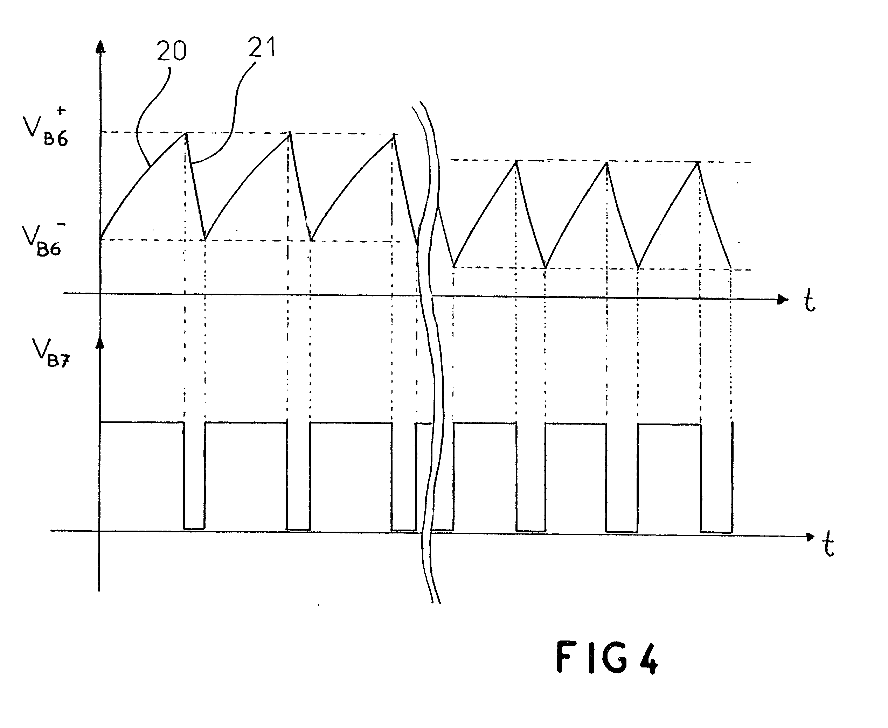

La tension en sortie B7 de l'amplificateur opérationnel (14) reste à une valeur basse tant que la tension aux bornes de la capacité C1 reste supérieure au potentiel présent sur la borne non inverseuse B5. Le chronogramme de la figure 4 illustre les phases de charge (20) et de décharge (21) de la capacité.

Il est à noter que la capacité C1 est utilisée lorsque la tension en sortie B7 d'amplificateur opérationnel (14) soit haute ou basse. Cela signifie que les éventuelles dérives dues à la température ou à la précision de cette capacité, qui modifient le temps de charge, sont identiques pour les temps hauts et les temps bas du signal de rapport cyclique variable. Le rapport entre les temps hauts et les temps bas est donc inchangé en fonction de cette dérive en température.

Lorsque la valeur de la résistance CTN varie, la tension en sortie de l'étage de conditionnement varie également, de sorte que les valeurs limites V_{B6}⁺ et V_{B6}⁻ entre lesquelles varie la tension de la capacité C1 évoluent. La deuxième partie du chronogramme de la figure 4 illustre une telle situation dans laquelle la variation de la résistance CTN induit une diminution de la tension en sortie B8 de l'étage de conditionnement, et compte tenu des lois de charge à la capacité C1, du rapport cyclique caractéristique.

Comme illustré à la figure 2, le générateur de rapport cyclique (13) alimente un étage de transmission (15) comportant un amplificateur opérationnel (16) agissant en comparateur, et commandant un transistor T1. En fonction de l'état de conduction du transistor T1, la diode électroluminescente D4 est parcourue par un courant, et émet donc le signal de rapport cyclique variable en direction du socle.

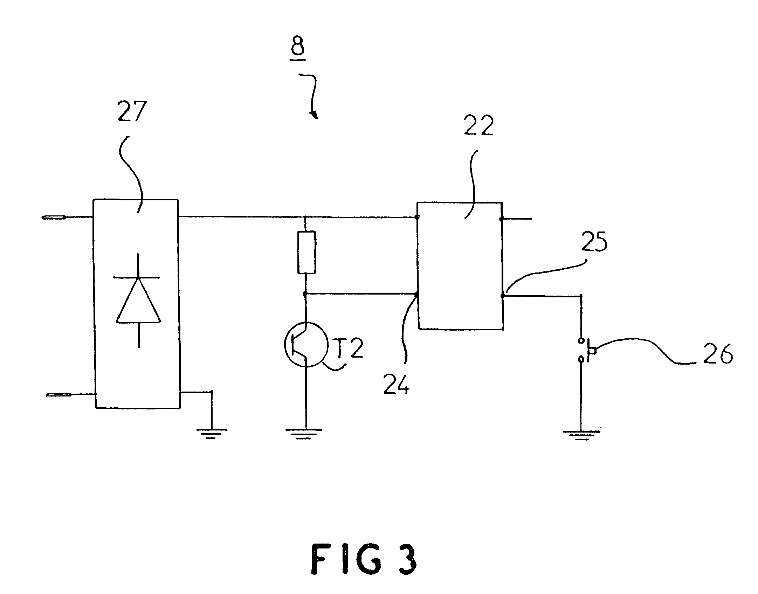

Au niveau du socle (1), les moyens électroniques (8) recevant le signal issu du pot sont illustrés à la figure 3. Ces moyens électroniques (8) comprennent une alimentation continue (27) et un microcontrôleur (22) présentant de multiples entrées et sorties. Ce microcontrôleur (22) comporte des entrées logiques, correspondant à l'état de boutons poussoirs (26) ou analogue situés sur le socle (1). Il est à noter que grâce à cette disposition il n'est pas nécessaire de disposer des boutons poussoirs sur le pot mobile (2), ce qui diminue les contraintes d'étanchéité du pot (2).

Une autre de ces entrées (24) est reliée à un phototransistor T2 sensible au faisceau issu du pot mobile (2). Le signal de rapport cyclique variable est donc analysé par le microcontrôleur (22).

Ainsi, en fonction du signal de rapport cyclique variable, le microcontrôleur (22) est apte à déterminer la température de l'eau présente dans le pot, ou bien encore une surchauffe de la résistance chauffante due à une absence d'eau.

En fonction de cette information, le microcontrôleur (22) est apte à commander des contacteurs ou des relais (9) assurant l'alimentation de la résistance chauffante (4).

Il est ainsi possible d'interrompre cette alimentation dès que l'eau arrive à ébullition, ce qui évite que trop d'eau ne s'évapore. Cela permet également d'interrompre l'alimentation de la résistance chauffante lorsque la bouilloire est mise en marche en absence d'eau.

Bien entendu, l'invention n'est en aucun cas limitée à la forme illustrée, et couvre également les variantes dans lesquelles le signal de rapport cyclique n'est pas transmis sous forme optique, mais directement par un contact électrique, ou une onde radio.

Comme déjà dit, l'invention couvre également d'autres types d'appareils tels que notamment les épilateurs à la cire, les cafetières les théières, les appareils de cuisson ou les fers à repasser.

Il ressort de ce qui précède que les appareils conformes à l'invention présentent l'avantage important d'assurer une fiabilité optimale par l'emploi d'un nombre très limité de composants actifs embarqués sur le pot mobile. En outre, le montage électronique utilisé est relativement insensible aux dérives en température, ou la précision des composants utilisés.

## Revendications

1. Appareil électroménager, comprenant un élément mobile (2) apte à être mis en place de façon amovible sur un socle (1), dans lequel l'élément mobile (2) comporte une résistance électrique chauffante (4) apte à être alimentée par une source d'énergie électrique associée au socle (1) via un connecteur (5) situé dans la zone de contact entre l'élément mobile (2) et le socle (1), et dans lequel un signal représentatif d'une grandeur physique de l'élément mobile (2) est apte à être transmis de l'élément mobile (2) vers le socle (1), **caractérisé en ce que** l'élément mobile (2) comprend des moyens électroniques analogiques (10) incluant un générateur de rapport cyclique variable (13) en fonction d'une information représentative d'une grandeur physique de l'élément mobile (2).

2. Appareil électroménager selon la revendication 1, **caractérisé en ce qu'**il comporte un module électronique de conditionnement (11), délivrant au générateur de rapport cyclique variable (13) une tension fonction de la grandeur physique de l'élément mobile (2).

3. Appareil électroménager selon la revendication 2, **caractérisé en ce que** le module de conditionnement est relié à une thermistance (CTN) sensible à la température d'un organe de l'élément mobile (2).

4. Appareil électroménager selon la revendication 1, **caractérisé en ce qu'**il comporte un module de transmission (15) du signal issu du générateur de rapport cyclique variable (13).

5. Appareil électroménager selon la revendication 4, **caractérisé en ce que** le module de transmission (15) comporte un composant opto-électronique (D4) commandé par le signal issu du générateur de rapport cyclique variable (13), en vue de l'émission d'un signal optique depuis l'élément mobile (2) vers le socle (1).

6. Appareil électroménager selon la revendication 4, **caractérisé en ce que** le module de transmission comporte une broche de connexion alimentée par le signal issu du générateur de rapport cyclique variable, en vue de la transmission d'un courant depuis l'élément mobile vers le socle.

7. Appareil électroménager selon la revendication 4, **caractérisé en ce que** le module de transmission comporte un émetteur radio commandé par le signal issu du générateur de rapport cyclique variable, en vue de l'émission d'ondes radio depuis l'élément mobile vers le socle.

8. Appareil électroménager selon la revendication 2 et la revendication 3 ou 4, **caractérisé en ce que** le générateur de rapport cyclique variable (13), le module de conditionnement (11) et le module de transmission (15) comportent chacun un amplificateur opérationnel, les différents amplificateurs opérationnels étant contenus dans un même boîtier électronique.

## Patentansprüche

1. Elektrohaushaltsgerät, aufweisend ein bewegliches Element (2), das auf abnehmbare Weise auf einen Sockel (1) angebracht werden kann, bei welchem das bewegliche Element (2) einen elektrischen Heizwiderstand (4) aufweist, der über eine elektrische Stromquelle versorgt werden kann, welche über einen Stecker (5), der sich in dem Kontaktbereich zwischen dem beweglichen Element (2) und dem Sockel (1) befindet, dem Sockel (1) zugeordnet ist, und bei dem ein Signal, das für eine physikalische Größe des beweglichen Elementes (2) repräsentativ ist, von dem beweglichen Element (2) zum Sockel (1) übertragen werden kann, **dadurch gekennzeichnet, dass** das bewegliche Element (2) analoge, elektronische Mittel (10) aufweist, die einen Generator (13) eines variablen, zyklischen Verhältnisses in Abhängigkeit von einer Information, die für eine physikalische Größe des beweglichen Elementes (2) repräsentativ ist, aufweist.

2. Elektrohaushaltsgerät nach Anspruch 1, **dadurch gekennzeichnet, dass** es ein elektronisches Aufbereitungsmodul (11) aufweist, das dem Generator (13) eines variablen, zyklischen Verhältnisses eine Spannung liefert, welche von der physikalischen Größe des beweglichen Elementes (2) abhängig ist.

3. Elektrohaushaltsgerät nach Anspruch 2, **dadurch gekennzeichnet, dass** das Aufbereitungsmodul mit einem Thermistor (NTC) verbunden ist, der auf die Temperatur eines Organs des beweglichen Elementes (2) anspricht.

4. Elektrohaushaltsgerät nach Anspruch 1, **dadurch gekennzeichnet, dass** es ein Modul (15) zur Übertragung des Signals vom Generator (13) eines variablen, zyklischen Verhältnisses aufweist.

5. Elektrohaushaltsgerät nach Anspruch 4, **dadurch gekennzeichnet, dass** das Übertragungsmodul (15) ein optoelektronisches Bauteil (D4) aufweist, das von dem Signal vom Generator (13) eines variablen, zyklischen Verhältnisses gesteuert wird, um ein optisches Signal von dem beweglichen Element (2) zum Sockel (1) zu senden.

6. Elektrohaushaltsgerät nach Anspruch 4, **dadurch gekennzeichnet, dass** das Übertragungsmodul einen Verbindungsstift aufweist, der durch das Signal vom Generator eines variablen, zyklischen Verhältnisses versorgt wird, um einen Strom von dem beweglichen Element zum Sockel zu übertragen.

7. Elektrohaushaltsgerät nach Anspruch 4, **dadurch gekennzeichnet, dass** das Übertragungsmodul einen Funksender aufweist, der von dem Signal vom Generator eines variablen, zyklischen Verhältnisses gesteuert wird, um Funkwellen von dem beweglichen Element zum Sockel zu senden.

8. Elektrohaushaltsgerät nach Anspruch 2 und nach Anspruch 3 oder 4, **dadurch gekennzeichnet, dass** der Generator (13) eines variablen, zyklischen Verhältnisses, das Aufbereitungsmodul (11) und das Übertragungsmodul (15) jeweils einen Operationsverstärker aufweisen, wobei die verschiedenen Operationsverstärker in ein und demselben elektronischen Gehäuse enthalten sind.

## Claims

1. A domestic electrical appliance comprising a moving element (2) suitable for being removably placed on a base (1), in which the moving element (2) includes a heater electrical resistor (4) suitable for being powered by an electrical power supply associated with the base (1) via a connector (5) situated in the zone of contact between the moving element (2) and the base (1), and in which a signal representative of a physical magnitude of the moving element (2) is suitable for being transmitted from the moving element (2) to the base (1), the appliance being **characterized in that** the moving element (2) includes analog electronic means (10) including a duty ratio generator (13) that is variable as a function of information representative of a physical magnitude of the moving element (2).

2. A domestic electrical appliance according to claim 1, **characterized in that** it includes a conditioning electronic module (1) delivering a voltage to the variable duty ratio generator (13), which voltage is a function of the physical magnitude of the moving element (2).

3. A domestic electrical appliance according to claim 2, **characterized in that** the conditioning module is connected to a thermistor (CTN) responsive to the temperature of a member of the moving element (2).

4. A domestic electrical appliance according to claim 1, **characterized in that** it includes a transmitter module (15) for transmitting the signal from the variable duty ratio generator (13).

5. A domestic electrical appliance according to claim 4, **characterized in that** the transmitter module (15) comprises an optoelectronic component (D4) controlled by the signal from the variable duty ratio generator (13) in order to emit a light signal from the moving element (2) towards the base (1).

6. A domestic electrical appliance according to claim 4, **characterized in that** the transmitter module includes a connection pin supplied with the signal from the variable duty ratio generator in order to transmit an electrical current from the moving element towards the base.

7. A domestic electrical appliance according to claim 4, **characterized in that** the transmitter module includes a radio transmitter controlled by the signal from the variable duty ratio generator in order to transmit radio waves from the moving element towards the base.

8. A domestic electrical appliance according to claim 2 and claim 3 or claim 4, **characterized in that** the variable duty ratio generator (13), the conditioning module (11), and the transmitter module (15) comprise respective operational amplifiers, the various operational amplifiers being contained in a common electronics package.
